# EUROPÄISCHE PATENTSCHRIFT

(11) **EP 2 917 572 B1**
(45) Veröffentlichungstag und Bekanntmachung des Hinweises auf die Patenterteilung: **28.02.2018**
(21) Anmeldenummer: 13782673.1
(22) Anmeldetag: 16.10.2013
(51) Int. Cl.: F03D 80/70, F03D 13/20, F03D 7/02, F03D 80/80, F03D 1/00

(54) **WINDENERGIEANLAGE**
WIND TURBINE
ÉOLIENNE

(30) Priorität: 09.11.2012 DE 102012220502
(43) Veröffentlichungstag der Anmeldung: 16.09.2015
(73) Patentinhaber: Wobben Properties GmbH, 26607 Aurich (DE)
(72) Erfinder: RÖER, Jochen, 27777 Ganderkesee (DE); HOFFMANN, Alexander, 26721 Emden (DE)
(74) Vertreter: Eisenführ Speiser
(86) Internationale Anmeldenummer: PCT/EP2013/071623
(87) Internationale Veröffentlichungsnummer: WO 2014/072157

(56) Entgegenhaltungen:
- EP-A1- 1 319 830
- EP-A2- 1 736 665
- US-A1- 2008 272 604
- US-A1- 2009 167 023
- US-A1- 2011 316 286

## Beschreibung

Die vorliegende Erfindung betrifft ein Verfahren zum Entwerfen einer Windenergieanlage.

Windenergieanlagen sind allgemein bekannt, sie wandeln Windenergie in elektrische Energie um. Eine typische Windenergieanlage weist einen Turm auf, auf dem eine Gondel angeordnet ist, die einen aerodynamischen Rotor und einen elektrischen Generator aufweist. Die Gondel ist auf einem Azimutlager auf dem Turm gelagert, um dadurch in der horizontalen Ebene drehbar zu sein, um also in ihrem Azimutwinkel zum Wind einstellbar zu sein. Ein solches Azimutlager muss enorme Kräfte aufnehmen, da es die gesamte Gondel tragen muss. Eine solche Gondel kann je nach Anlage mehrere hundert Tonnen wiegen. Als weitere Belastung kann ein Winddruck auf den Rotor der Windenergieanlage zu einem Kippmoment und dadurch zu zusätzlicher Belastung auch an dem Azimutlager führen.

Aus der europäischen Patentanmeldung EP 1 247 021 B1 ist es bekannt, segmentierte, feste aber lösbar befestigte Gleitelemente für ein Azimutlager zu verwenden, um einer hohen Belastung des Azimutlagers dadurch zu begegnen, dass die Gleitbelege auf einfache Weise getauscht werden können. Dadurch können Reparaturkosten verringert werden, die durch den Verschleiß eines Azimutlagers auftreten. Die Ursache des Verschleißes ist hierbei aber nicht behoben worden.

US 2008/272604 A1 oder EP 1 319 830 A1 zeigen jeweils eine Windenergieanlage mit einem senkrechten Turm, an dessen oberen Ende eine Gondel drehbar über ein Azimutlager angeordnet ist. Zwischen der Gondel und dem Azimutlager ist ein zylindrischer Mantel bzw. ein zylindrischer Hals vorgesehen, so dass das Azimutlager im Abstand unterhalb der Gondel angeordnet ist.

US 2011/316286 A1 zeigt eine Windenergieanlage sowie ein Azimutlager-System für eine Windenergieanlage. Die Windenergieanlage umfasst eine Gondel, welche über das Azimutlager-System aus einem oberen Azimutlager und einem im Abstand zum oberen Azimutlager angeordneten unteren Azimutlager mit dem Turm der Windenergieanlage verbunden ist.

Das deutsche Patent- und Markenamt hat in der Prioritätsanmeldung folgenden Stand der Technik recherchiert: US 2012/0133148 A1 und EP 2 075 464 A2.

Der vorliegenden Erfindung liegt somit die Aufgabe zugrunde, wenigstens eines der oben genannten Probleme zu adressieren. Insbesondere soll eine Lösung zum Reduzieren von Belastungen des Azimutlagers vorgeschlagen werden. Zumindest soll eine alternative Lösung vorgeschlagen werden.

Erfindungsgemäß wird somit ein Verfahren zum Entwerfen einer Windenergieanlage nach Anspruch 1 vorgeschlagen. Dieses Verfahren betrifft die Bestimmung der Anordnung des Azimutlagers in senkrechter Richtung, also insbesondere den Abstand zwischen Azimutlager und Unterseite der Gondel. Hierbei wird zunächst davon ausgegangen, dass die Windenergieanlage dem Grunde nach bereits festgelegt ist, insbesondere kann von einem bereits bekannten Typ einer Windenergieanlage ausgegangen werden, der lediglich hinsichtlich der Position des Azimutlagers noch verbessert werden soll. Insoweit kann das beanspruchte Verfahren zum Entwerfen einer Windenergieanlage auch als Verfahren zum Ändern einer Windenergieanlage verstanden werden. Hiernach wird nun vorgeschlagen, dass ein zu erwartendes höhenabhängiges Schubmoment der Windenergieanlage bestimmt wird, insbesondere für Nennbetrieb der Windenergieanlage. Es wird somit eine Funktion oder zumindest eine Datenreihe für das Schubmoment aufgenommen. Dies kann beispielsweise mit Hilfe einer Simulation erfolgen oder es kann, sofern eine existierende Anlage verbessert werden soll, auf Messwerte zurückgegriffen werden, oder es können dafür gezielt Messwerte aufgenommen werden. Das Nickmoment kann als fester Wert berücksichtigt werden.

Alternativ kann auch ein umfangreicher Datensatz oder eine Funktionenschar des Schubmomentes für ganz unterschiedliche, zu erwartende Betriebsbedingungen aufgenommen werden, um daraus ein mittleres Schubmoment zu bestimmen. Außerdem oder alternativ kann vorab bestimmt werden, welcher Betriebszustand als häufigster oder als repräsentativster erwartet werden darf bzw. im Falle einer Vergleichsanlage aufgetreten ist. Darauf basierend kann das Schubmoment bestimmt werden.

Abhängig von den so bestimmten Nickmomenten und Schubmomenten bzw. höhenabhängigen Nickmomentes und höhenabhängigen Schubmomentes wird eine Höhenposition bestimmt, in der eine Summe aus Nickmoment und Schubmoment dem Betrage nach minimal ist, insbesondere null ist und diese Position wird dann als Höhenposition für das Azimutlager verwendet. Diese Höhenposition ist insbesondere in Bezug auf die Gondel zu beschreiben, also als der Azimutabstand von dem Azimutlager zur Gondel. Entsprechend bestimmt sich dann aus diesem Ergebnis auch die Größe, nämlich axiale Länge des notwendigen Schaftabschnittes.

Mit dem erfindungsgemäßen Verfahren wird eine Windenergieanlage entworfen, die eine Gondel mit einem darin angeordneten Generator, einen Turm und ein Azimutlager zum Verstellen der Gondel in ihrer Ausrichtung zum Wind aufweist.

Das Azimutlager ist dabei unterhalb der Gondel in einem vertikalen Abstand angeordnet. Dieser vertikale Abstand wird hier als Azimutabstand bezeichnet. Die Gondel wird auf dem Azimutlager über einen senkrechten Schaftabschnitt mit einer Länge des Azimutabstandes getragen. Es ist somit ein senkrechter Schaftabschnitt zwischen der Gondel und dem Azimutlager vorgesehen, der den Azimutabstand zwischen Gondel und Azimutlager schafft.

Hiermit wird der bisher klassische Weg verlassen, bei dem oben auf dem Turm das Azimutlager angeordnet wurde und darauf unmittelbar die Gondel montiert wurde. Dabei reichte häufig eine Gondelverkleidung im Bereich des Turmes, nämlich oben im Bereich des Turmkopfes und noch etwas von der Gondel herunter und konnte dadurch das Azimutlager vor Witterungseinflüssen schützen. Häufig war an dieser Stelle auch ein Lufteinlass zum Einsaugen von Außenluft zwischen Turm und Gondelverkleidung hindurch.

Es wurde nun aber erkannt, dass insbesondere Biege- bzw. Kippmomente im Bereich des Azimutlagers zu einer hohen Beanspruchung des Azimutlagers führen. Dabei gibt es insbesondere zwei Ursachen für Biegemomente bzw. Kippmomente im Bereich des Azimutlagers.

Zum einen führt das Gewicht insbesondere des Generators und auch noch unterstützt durch das Gewicht der Rotorblätter zu einem Gewichtsschwerpunkt in der Gondel, der weit vor dem Turm liegt. Das ist insbesondere in Bezug auf eine bestimmungsgemäße Ausrichtung zum Wind dann gesehen aus der Windrichtung zu verstehen. Hierdurch entsteht ein so genanntes Nickmoment. Dieses Nickmoment ist ein statisches Moment, das sich aus dem Gewicht der Gondel und der Position des Gewichtsschwerpunktes ergibt. Im Betrieb der Windenergieanlage resultiert somit ein Nickmoment zum Wind hin. Als weiteres Moment ist ein Schubmoment zu berücksichtigen, das sich aus dem Winddruck auf die Windenergieanlage, insbesondere die Rotorblätter ergibt. Das Schubmoment ist dabei ein dynamisches Moment, das vom Betrieb der Windenergieanlage und insbesondere dem vorherrschenden Wind abhängt.

Das Schubmoment hängt von der jeweils betrachteten Höhe am Turm ab. Die Belastung des Schubmomentes nimmt mit der Höhe des Turms ab, wohingegen das Nickmoment über die Höhe des Turms konstant bleibt. Dabei sind diese beiden Momente in ihrer Richtung entgegengesetzt, während nämlich das Nickmoment zu einem Moment in Richtung zum Wind hin führt, führt das Schubmoment zu einem Moment vom Wind weg. Diese beiden Momente überlagern sich und ganz oben am Turmkopf überwiegt das Nickmoment, wohingegen unten am Turmfuß das Schubmoment überwiegt. Es gibt somit, zumindest theoretisch, einen Bereich oder Punkt, an dem beide Momente sich aufheben bzw. sich zu null überlagern. In genau diesem Bereich, also in diesem Höhenbereich des Turms wird nun vorgeschlagen, das Azimutlager anzuordnen. Natürlich muss das Azimutlager nach wie vor das Gewicht der Gondel mit Generator und Rotorblätter tragen, aber ein Kipp- oder Biegemoment tritt dort zumindest geringer auf als ganz oben am Turmkopf, was jedoch auch windabhängig ist.

Der beschriebene Effekt tritt besonders stark auf, wenn der Gewichtsschwerpunkt und insbesondere der Generator vor dem Azimutlager angeordnet ist, bezogen auf eine reine Betrachtung in horizontaler Richtung. Eine Anordnung vor dem Azimutlager beinhaltet also eine Anordnung vor aber gleichzeitig oberhalb des Azimutlagers. Mit anderen Worten wird hier der Generator frei vor dem Turm, zumindest vor dem Turm im Bereich seines oberen Turmkopfes und frei vor dem Azimutlager getragen. Unterhalb der Gondel im Bereich des Generators befindet sich also zunächst einmal nichts. Allenfalls kann die Windenergieanlage weiter unten zum Turmfuß hin so breit werden, dass hier ein Abschnitt des Turmes unterhalb des Generators angeordnet ist. Im Bereich des Turmkopfes steht die Gondel aber mit ihrem Generator gemäß der beschriebenen Ausführungsform vollständig vor.

Jedenfalls für diese Art einer Windenergieanlagengondel ist es vorteilhaft, das Azimutlager weiter nach unten zu verlagern, nämlich idealerweise dort, wo sich das Nickmoment und das Schubmoment aufheben. Weil das Nickmoment statisch und damit im Grunde konstant ist, das Schubmoment aber vom Winddruck und damit sowohl vom vorherrschenden Wind als auch vom Betriebszustand der Windenergieanlage abhängt, kann im Betrieb das Kipp- oder Biegemoment am Azimutlager leider nicht dauerhaft auf den Wert null gehalten werden. Gleichwohl ist eine Minimierung des Kipp- oder Biegemomentes im Bereich des Azimutlagers durch entsprechende Positionierung des Azimutlagers möglich. Hierzu wird vorzugsweise vorgeschlagen, ein mittleres Schubmoment zugrunde zu legen, nämlich insbesondere ein mittleres zu erwartendes Schubmoment. Dieses kann von Standort und Anlage abhängig sein. Meist ist aber vor Aufstellung der Windenergieanlage bekannt, mit was für einem Windspektrum zu rechnen ist und wie die Anlage dafür eingestellt sein wird. Es kommt nämlich auch auf die Stellung der Rotorblätter an, wenn diese verstellbar sind. Alternativ kann auch eine Bestimmung des für die Berechnung zugrunde zu legenden Schubmomentes auf einer vorbestimmten Windgeschwindigkeit, wie beispielsweise Nennwind, basieren. Hierfür wird für einen insbesondere idealen Nennwind ein Schubmoment berechnet und ein Nickmoment berechnet und diese überlagert und die Überlagerung in Abhängigkeit der Höhe des Turmes ausgewertet. Dort, wo diese Überlagerung den Wert null annimmt wird vorgeschlagen, das Azimutlager anzuordnen.

Gleichwohl kann hierdurch auch eine generelle Höhenposition des Azimutlagers für einen bestimmten Anlagentyp abgeleitet werden. Zwar hängen die Windlasten und damit das Schubmoment vom Aufstellungsort ab, aber weil Windenergieanlagen abhängig von bestimmten Windklassen ausgelegt sind, ein bestimmter Windenergieanlagentyp also grundsätzlich für dieselbe Windklasse vorgesehen ist, kann eine einmal bestimmte Position der Höhe des Azimutlagers als Höhe für alle Windenergieanlagen dieses Typs zugrunde gelegt werden. Insoweit dieselbe Windenergieanlage für unterschiedliche Turmhöhen vorgesehen ist, der betreffende Windenergieanlagentyp also im Wesentlichen nur in Bezug auf die Turmhöhe variiert, kann die Höhe des Azimutlagers in Bezug auf die Gondel festgelegt werden. Das Azimutlager ist mit dem beschriebenen Azimutabstand zur Gondel hin anzuordnen, insbesondere unabhängig von der Gesamthöhe des Turms. Hierbei haben sich Werte im Bereich von 2,5 m für den Azimutabstand als gute Werte herausgestellt. Jedenfalls kann sich durch eine Herabsetzung des Azimutlagers in seiner Höhe im Vergleich zu vorherigen Windenergieanlagen um etwa 2,5 m bereits ein Vorteil ergeben, selbst wenn die optimale Höhe je nach konkreten Randbedingungen um einige Zentimeter oder vielleicht sogar einen halben Meter variieren würde. Vorzugsweise wird ein Azimutabstand im Bereich von 2 bis 3 m gewählt. Jedenfalls sollte sich bei einem Azimutabstand von 1,5 m bis 5 m ein positives Ergebnis erzielen lassen.

Es wird darauf hingewiesen, dass Nennwindgeschwindigkeit, was verkürzt auch als Nennwind bezeichnet wird, diejenige Windgeschwindigkeit ist, auf die die Windenergieanlage ihren Nennbetriebspunkt richtet. Üblicherweise arbeitet eine Windenergieanlage bei Windgeschwindigkeiten unterhalb der Nennwindgeschwindigkeit bis zur Nennwindgeschwindigkeit im so genannten Teillastbetrieb, in dem die Windenergieanlage noch keine Nenndrehzahl und auch noch keine Nennleistung aufweist. Bei pitchgeregelten Anlagen, bei denen also der Rotorblattwinkel verstellt, nämlich gepitcht werden kann, wird üblicherweise im Teillastbereich ein konstanter Rotorblattwinkel zugrunde gelegt. Ab und oberhalb der Nennwindgeschwindigkeit, die Nennwindgeschwindigkeit als Wert ist schließlich nur ein mathematischer Punkt, wird die Windenergieanlage mit Nenndrehzahl und/oder Nennleistung betrieben. Bei einer pitchgeregelten Anlage erfolgt hier ein Verstellen des Rotorblattwinkels, um die Nennwindgeschwindigkeit einhalten zu können, bis sie bei noch höheren Windgeschwindigkeiten gedrosselt oder abgeschaltet werden muss. Auf eben eine solche Nennwindgeschwindigkeit beziehen sich obige Ausführungen. Dennoch kann typischerweise davon ausgegangen werden, dass die Nennwindgeschwindigkeit etwa im Bereich von 12 bis 17 m/s liegen kann.

Die Windenergieanlage weist einen Schaftabschnitt mehrere Azimutmotoren zum Bewirken der Ausrichtung der Gondel auf, die an dem Schaftabschnitt fest befestigt sind und gemeinsam in einen fest mit dem Turm verbundenen Zahnkranz mit Innenverzahnung greifen, um dadurch eine Drehbewegung des Schaftabschnitts und damit auch der Gondel relativ zum Turm zu bewirken. Durch das tiefer gelegene Anordnen des Azimutlagers wird somit gleichzeitig eine Möglichkeit geschaffen, auch die Azimutantriebe bzw. Azimutmotoren in diesem Schaftabschnitt anzuordnen, der den Abstand zwischen Gondel und Azimutlager schafft. Hierdurch kann ein weiterer Vorteil geschaffen werden, dass nämlich im Bereich der Gondel, wo die Azimutantriebe bisher angeordnet waren, nun mehr Platz vorhanden ist. Diese im Grunde zur Gondel beabstandete Anordnung der Azimutantriebe kann auch die elektromagnetische Verträglichkeit, kurz EMV, innerhalb der Gondel insgesamt verbessern. Durch die zur Gondel beabstandete Anordnung der Azimutantriebe, die entsprechend beabstandete Anordnung der Zuleitungen und ggf. auch der Ansteuermodule kann diese Verbesserung erreicht werden. Ggf. verbessert sich die EMV-Situation auch durch eine insgesamt weitere Verteilung der Azimutantriebe. Die Azimutantriebe sind möglichst gleichmäßig kreisförmig, insbesondere äquidistant und/oder zur Außenseite des Schaftabschnitts hin angeordnet. Dabei verbessert sich die elektromagnetische Verträglichkeit auch dahingehend, dass die Azimutantriebe weniger durch elektrische Einrichtungen in der Gondel gestört werden.

Vorzugsweise sind wenigstens acht, insbesondere wenigstens 10 und besonders bevorzugt genau 14 Azimutantriebe vorgesehen. Zunächst einmal schafft die Verwendung des Schaftabschnitts die Möglichkeit, eine solche Vielzahl von Azimutantrieben einzusetzen und an einen Zahnkranz, nämlich insbesondere dem innenverzahnten Zahnkranz, anzugreifen. Hierdurch kann auch eine Vergleichmäßigung der verteilten Kräfte der einzelnen Azimutantriebe erreicht werden. Bei vorbekannten Lösungen mit Azimutantrieben in der Gondel sind häufig Aufbauten in der Gondel, insbesondere der Maschinenträger, einer gleichmäßigen Anordnung der Azimutantriebe hinderlich gewesen. Somit ist eine gleichmäßige und damit auch verschleißärmere Aufteilung der notwendigen Kräfte zur Azimutverstellung erreicht.

Gemäß einer Ausführungsform weist der Schaftabschnitt Aufnahmeöffnungen zum Aufnehmen der Azimutantriebe auf. Insbesondere können für jeden Azimutantrieb zwei Aufnahmeöffnungen vertikal übereinander angeordnet sein, in die jeweils ein Azimutantrieb in Richtung seiner Drehachse eingesteckt und befestigt wird. Das Anordnen der Azimutantriebe kann somit in diesem Schaftabschnitt vorbereitet werden. Vorzugsweise sind die Aufnahmen entlang der Außenwand des Schaftabschnitts angeordnet und daran befestigt, wobei diese Außenwand vorzugsweise auch die einzige Wand des Schaftabschnitts ist. Durch die Verwendung einer Vielzahl von Azimutantrieben und somit einer Vielzahl von Aufnahmen für Azimutantriebe, die dort an der Wandung befestigt sind, ist auch eine gleichmäßige Befestigung an der Wand möglich, die zudem im Gegensatz zu weniger ungleichmäßigen Befestigungsstellen diese Wandung weniger schwächt. Alternativ kann in dem Schaftabschnitt zum Azimutlager hin ein entsprechender umlaufender Befestigungsring vorgesehen sein, der diese Azimutaufnahmen beinhaltet.

Der Schaftabschnitt bildet somit auch eine Art Turmverlängerung bzw. Teil des Turms, der sich relativ zum Turm dreht. Letztlich ist nicht von Bedeutung, ob dieser Schaftabschnitt eher dem Turm oder der Gondel zugerechnet wird. Dieser Schaftabschnitt ist ein eigenständiges Element, das auch als Azimutmodul bezeichnet werden kann. Dieses Azimutmodul ist dabei an der darüber angeordneten Gondel fest befestigt, was beispielsweise durch Verschrauben an einem Flanschabschnitt erfolgen kann. Der Schaftabschnitt als eigeständiges Element wird auch eigenständig hergestellt. Hierdurch lässt sich auch das Herstellverfahren eines Maschinenträgers einer Gondel vereinfachen, wenn dieser Maschinenträger, der auch die Gondel bilden kann, nicht mehr für die Aufnahme der Azimutantriebe vorbereitet sein muss und im Übrigen in seinem Inneren auch mehr Platz zur Verfügung hat.

Der Schaftabschnitt ist etwa rohrförmig, insbesondere zylindrisch ausgebildet. Im Grunde bildet der Schaftabschnitt hinsichtlich seiner Außenkontur einen Zylinderabschnitt oder einen rohrförmigen, gegenüber einem Zylinderabschnitt leicht konischen Abschnitt, der in seinem Außendurchmesser etwa dem obersten Bereich des Turms entspricht. In einer Außen- bzw. Seitenansicht der Windenergieanlage tritt somit auch der Schaftabschnitt im Wesentlichen als oberstes Ende des Turmes in Erscheinung. Ein solcher rohrförmiger, insbesondere zylindrischer Schaftabschnitt kann gleichmäßig und vergleichsweise einfach hergestellt werden und ermöglicht die Anordnung vieler Azimutantriebe in einem großen kreisförmigen Bereich und ist auf die Befestigung eines Azimutlagers gut angepasst.

Gemäß einer Ausführungsform weist der Schaftabschnitt wenigstens eine Kühlungsöffnung zum Ansaugen von Außenluft in die Windenergieanlage hinein auf. Dieser Schaftabschnitt bietet entsprechenden Raum, solche Lüftungsöffnungen anzuordnen, die dabei vorher bei Fertigung dieses Schaftabschnitts angeordnet werden können, wie beispielsweise in einem Gussverfahren des gesamten Schaftabschnitts oder durch ein späteres Einbringen. Ebenfalls ist Platz für einen Abscheider oder Filter zum Abscheiden von Feuchtigkeit und/oder zum Herausfiltern von Verunreinigungen in der Außenluft. Entsprechend wird die Außenluft in die Windenergieanlage hineingesaugt, wobei die betreffenden Gebläse auch an anderer Stelle, wie beispielsweise in der Gondel, angeordnet sein können und diese so ggf. getrocknete und gereinigte Außenluft zum Kühlen in der Gondel verwendet werden kann.

Vorteilhaft ist hierbei, dass somit ein bisher bekanntes System, das die Außenluft in einem Ringspalt zwischen Turm und Gondelverkleidung einsaugt, auf einfache Art und Weise auf die Verwendung dieses Schaftabschnittes angepasst werden kann, weil die Weiterleitung der angesaugten Außenluft zum Kühlen im Bereich der Gondel unverändert bleiben kann. Durch die Einsaugung der Außenluft in diesem Schaftabschnitt und damit ganz oben im Turm wird insbesondere auch vermieden, bodennähere Luft anzusaugen, die dazu neigt, wärmer zu sein und mehr Verschmutzungen aufzuweisen. Weiterhin wird eine entsprechende Anordnung von Lüftungsöffnungen einschließlich Abscheidern in der Gondel vermieden. Dadurch ergeben sich mehr Freiheiten beim Design der Gondel und insbesondere auch die Gondel durch solche Öffnungen nicht geschwächt zu werden.

Nachfolgend wird die Erfindung nun anhand von Ausführungsbeispielen unter Bezugnahme auf die begleitenden Figuren exemplarisch erläutert.
- Fig. 1: zeigt ein Diagramm, das ein höhenabhängiges Biegemoment veranschaulicht.
- Fig. 2: veranschaulicht einen Bezug des Diagramms der Fig. 1 zu einer Windenergieanlage schematisch.
- Fig. 3: zeigt schematisch in einer seitlichen Schnittansicht einen Schaftabschnitt einer Windenergieanlage und einen Teil einer Gondel einer Windenergieanlage.
- Fig. 4: zeigt eine ganz ähnliche Ausführungsform zu Fig. 3 in einer Schnittansicht von vorne.
- Fig. 5: zeigt einen Ausschnitt aus Fig. 3.

Nachfolgend können ähnliche Elemente gleiche aber nicht identische Ausführungsformen zur Veranschaulichung der gemeinsamen Funktionalität mit demselben Bezugszeichen bezeichnet sein.

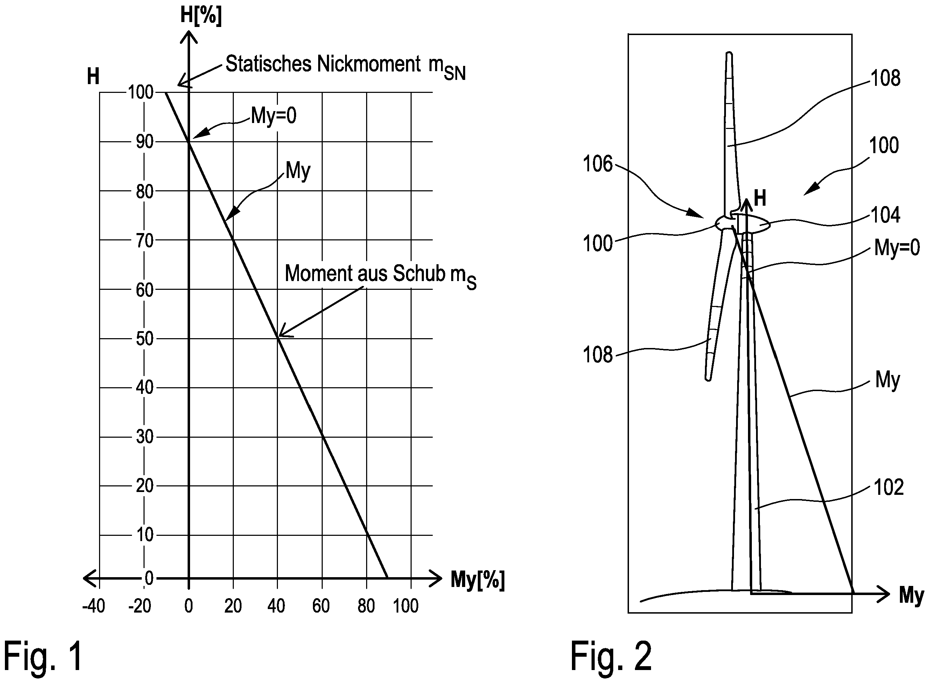

Das Diagramm der Fig. 1 zeigt das Turmbiegemoment My in Abhängigkeit von der Höhe. Dabei kann das Biegemoment My auch als Turmkollektive My bezeichnet werden. Zur besseren Veranschaulichung ist hier aber das Biegemoment My an der Abszisse und die Turmhöhe an der Ordinate abgetragen. Das Biegemoment My ist dabei normiert auf das maximale Schubmoment in % aufgetragen und die Höhe normiert auf die Gesamtturmhöhe in % aufgetragen. Das Diagramm der Fig. 1 ist dabei eine Veranschaulichung und zeigt daher einen linearen Verlauf des Biegemomentes My.

Es ist zu erkennen bzw. soll durch das Diagramm veranschaulicht werden, dass das Biegemoment am Turmfuß, also bei der Höhe H=0 am größten ist. Es beträgt hier etwa den Wert 90% und es soll damit veranschaulicht werden, dass der Wert von 100% des Schubmomentes nicht erreicht wird, weil das Nickmoment abgezogen werden muss.

Bei der Turmspitze, also bei H=100% erreicht das Biegemoment My seinen kleinsten Absolutwert von etwa -10%. Hier beträgt nämlich das Schubmoment etwa 0% und das statische Nickmoment etwa 10%, aber mit negativem Vorzeichen.

Bei einer Turmhöhe von H=90% heben sich, in dieser veranschaulichten Darstellung, das statische Nickmoment und das Schubmoment bzw. das Moment aus Schub auf und ihre Summe erreicht somit den Wert 0. Das Diagramm veranschaulicht für das statische Nickmoment m_{SN} den Bereich, an dem dieses dominant ist, nämlich bei einer Höhe von H=100%. Für das Schubmoment m_{S} ergibt sich im Grunde für den restlichen Bereich der Turmhöhe, also insbesondere für Werte deutlich unter H=90% der dominante Bereich, was durch einen entsprechenden Pfeil "Moment aus Schub" m_{S} veranschaulicht wird.

Das veranschaulichende Diagramm von Fig. 1 kommt zu einem Biegemoment My=0 bei H=90%, was jedoch nur eine Veranschaulichung ist und nicht den konkreten Wert einer realistischen Windenergieanlage wiedergeben muss. Vielmehr ist der entsprechende Wert bei einer noch höheren Höhe zu erwarten, nämlich eher bei 95% oder noch höher. Das Diagramm weist diesen Schnittpunkt mit der Ordinate, nämlich dem Wert My=0 bei H=90% auf, um ihn besser erkennbar zu machen.

Das Diagramm der Fig. 1 ist, ohne Bemaßung, in die Abbildung der Fig. 2 eingetragen, die eine Windenergieanlage 100 mit einem Turm 102, einer Gondel 104, mit einem Rotor 106 mit drei Rotorblättern 108, von denen eines nicht zu erkennen ist, und einem Spinner 110 zeigt. Das Diagramm soll veranschaulichen, dass das Biegemoment My unterhalb der Gondel 104 den Wert 0 annimmt und daher dort vorzugsweise das Azimutlager anzuordnen wäre. Auch diese Fig. 2 ist nur eine Veranschaulichung, jedenfalls in Bezug auf das eingezeichnete Diagramm und der Wert My=0 wäre weiter oben zur Gondel hin, aber immer noch unter der Gondel, anzunehmen.

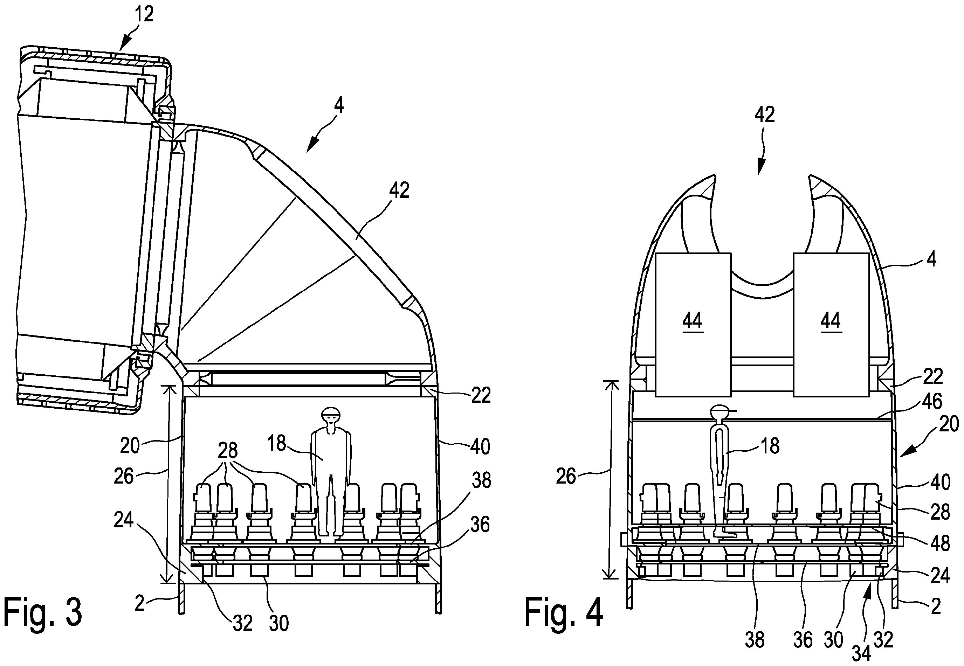

Fig. 3 zeigt in der Seitenansicht einen Teil einer Gondel 4, die einen Generator 12 aufweist, der hier als Außenläufer ausgebildet ist. An den Generator 12 schließt sich der aerodynamische Rotor mit Rotorblättern an, was in dieser Darstellung der Fig. 3 nicht gezeigt ist.

Mit der Fig. 3 soll ein Schaftabschnitt 20 erläutert werden, der nach oben hin mit einem ringförmigen Gondelanschlussflansch 22 mit der Gondel 4 verbunden ist, und die Gondel 4 somit auf dem Schaftabschnitt 20 getragen wird. Nach unten hin ist der Schaftabschnitt 20 über das Azimutlager 24 mit dem Turm 2 verbunden. Von dem Turm 2 ist nur ein oberster Ansatz gezeigt.

In dem Schaftabschnitt 20 ist eine Vergleichsperson 18 eingezeichnet, um die Größenordnung des Schaftabschnitts 20 zu verdeutlichen. Hier ist der Abstand vom Gondelanschlussflansch 22 bis zum Azimutlager 24 als Azimutabstand 26 eingezeichnet und beträgt etwa 2,5 m in dem gezeigten Bespiel, wie auch der Vergleich zu der Person 18 verdeutlicht.

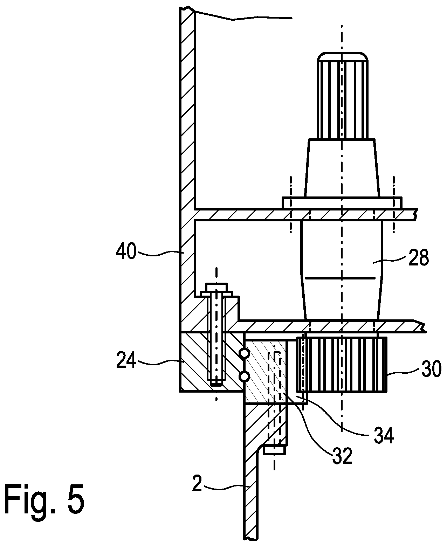

In dem Schaftabschnitt 20 sind in dem gezeigten Beispiel insgesamt 14 Azimutantriebe 28 vorgesehen, von denen in der Schnittansicht sieben zu sehen sind. Jeder Azimutantrieb 28 weist einen Ritzel 30 auf, das in einen innenverzahnten Zahnkranz 32 in einem Eingriffbereich 34 eingreift. Dieser Eingriffbereich einschließlich Azimutlager 24, Ritzel 30 und Teil eines Azimutantriebs 28 ist in der Fig. 5 vergrößert dargestellt.

Der Fig. 3 ist zudem zu entnehmen, dass die Azimutantriebe 28 in zwei kreisringförmigen Halteblechen 36 und 38 getragen werden. Dabei sind die Azimutantriebe 28 entlang des Außenmantels 40 des Schaftabschnitts 20 nach innen hin angeordnet und in der Mitte bleibt viel Platz zum Begehen des Schaftabschnitts 20. Ebenfalls können hier elektrische Leitungen und ein Lift hiindurchgeführt werden, um nur einige Elemente beim Namen zu nennen.

Fig. 4 zeigt einen ganz ähnlichen Schaftabschnitt 20 wie in der Fig. 3, so dass hier dasselbe Bezugszeichen verwendet wird. In Fig. 4 zeigt die Schnittansicht eine Perspektive von dem Generator 12 zu einer Gondelöffnung 42. Weiterhin sind zur Veranschaulichung zwei Freiräume 44 durch zwei Rechtecke veranschaulicht. Diese Freiräume 44 sollen verdeutlichen, dass durch das Konzept auch sehr viel Raum geschaffen wurde, der für verschiedene Installationen genutzt werden kann. Diese Freiräume 44 ragen hierbei teilweise in den Schaftabschnitt 20 hinein. Um auch begehbaren Platz zu schaffen, kann eine Bodenplatte 46 vorgesehen sein, die eine Öffnung enthalten kann, um dort hindurch steigen zu können. Eine weitere Bodenplatte 48 kann im unteren Teil des Schaftabschnitts 20 vorgesehen sein. Die eingezeichnete Person 18 soll lediglich zur Orientierung der Größenordnung dienen. Der Freiraum bzw. die Freiräume 44 ist/sind nun größer als bei anderen Konzepten, weil das Azimutlager nun weiter unten angeordnet ist.

Im Grunde unterscheidet sich der Schaftabschnitt 20 der Fig. 4 von dem Schaftabschnitt 20 der Fig. 3 nur in diesen beiden exemplarisch eingezeichneten Bodenplatten 46 und 48. Insoweit kann auch die Fig. 5 zur Veranschaulichung der Verbindung zwischen den Azimutantrieben 28 mit ihren Ritzeln 30 und dem Zahnkranz 32 im Bereich des Eingriffsbereichs 34 dienen. Auch für die weiteren Erläuterungen der Fig. 4 wird auf die Erläuterung zur Fig. 3 verwiesen. Es wird somit ein Schaftabschnitt, der auch als Azimutmodul bezeichnet werden kann, zwischen Gondel und Turm angeordnet. Am unteren Ende wird dieses Azimutmodul mit dem Azimutlager verbunden und dadurch mit dem Turm gekoppelt. Das Azimutlager liegt hierdurch um einen Azimutabstand von beispielsweise 2,5 m tiefer als die Gondel und damit auch 2,5 m tiefer als bisher.

Die Lagerbelastung kann dadurch verringert werden, sie erhöht sich zumindest nicht. Das Azimutmodul kann als Gussteil ausgebildet werden, wodurch Turmkosten eingespart werden können. Möglicherweise erhöhen sich Gondelkosten. Es wird aber eine gute Zugänglichkeit der Azimutantriebe geschaffen und überhaupt ein erhöhter Raumbedarf bzw. ein erhöhtes Raumangebot.

Durch die Anordnung der Azimutantriebe können hiervon mehrere verwendet werden und diese können vorzugsweise von oben in ihre Aufnahmen eingesetzt werden. Durch die Verwendung des Schaftabschnitts bzw. Azimutmoduls kann bei der Errichtung einer Windenergieanlage auch Kranhöhe eingespart werden. Dies begründet sich für den Fall, dass die Gondel eine heruntergezogene Schürze hat, die zunächst über den obersten Turmbereich hätte gehoben werden müssen. Nun kann das Azimutmodul an der Gondel befestigt werden und Gondel mit Azimutmodul braucht dann nur exakt auf die Höhe gehoben zu werden, in der sie auch installiert wird.

Die Innenverzahnung ermöglicht auch einen besseren Eingriff der Ritzel der Azimutantriebe in diese Verzahnung als bei einer Außenverzahnung, weil sich der Zahnkranz mit Innenverzahnung zu den Ritzeln hin krümmt, statt von ihnen weg, wodurch die Ritzel besser im Eingriff sein können.

Das Azimutmodul kann nun getrennt gefertigt werden und später mit der Gondel bzw. einem entsprechenden Gondelträger verbunden werden. Die gezeigte Gondel 4 der Fig. 3 und 4 kann insoweit auch als Gondelträger bezeichnet werden.

Dadurch, dass die Luft, nämlich die Außenluft, im Schaftabschnitt durch Öffnungen eingesaugt wird und dann weiter in die Gondel geführt wird, wird vermieden, dass diese Außenluft an dem Azimutlager vorbeigeführt wird, denn sie wird hier oberhalb des Azimutlagers angesaugt, insbesondere oberhalb des Fettes der Lager und auch der Getriebe, nämlich des Zahnkranzes mit Innenverzahnung und der Ritzel der Azimutantriebe.

In einem zylindrischen Schaftabschnitt können insbesondere aus statischen Gründen besser Lüftungsöffnungen zum Ansaugen von Außenluft vorgesehen werden. Vorteilhaft ist auch, dass einzelne Elemente, insbesondere die Azimutantriebe, besser getrennt getestet werden können, denn diese können hier allein in dem Schaftabschnitt ohne Gondel getestet werden.

Wird in Anlehnung an den Turm der Schaftabschnitt ebenfalls leicht konisch ausgebildet, weist der Schaftabschnitt im Bereich des Azimutlagers einen etwas größeren Durchmesser als im Bereich der Anbindung zur Gondel auf. Dadurch ergibt sich nochmal mehr Platz für die Azimutantriebe in dem Bereich. Außerdem können dadurch Lasten besser auf das Azimutlager verteilt werden.

Neben einer vorteilhaften Errichtung der Windenergieanlage ergeben sich auch Vorteile beim Transport, dadurch dass das Azimutmodul getrennt geliefert wird und vor Ort mit der Gondel verbunden werden kann.

## Patentansprüche

1. Verfahren zum Entwerfen einer Windenergieanlage (100), umfassend die Schritte:
- Bestimmen eines zu erwartenden Nickmomentes (m_{SN}) der Windenenergieanlage,
- Bestimmen eines zu erwartenden, höhenabhängigen Schubmomentes der Windenergieanlage (100), insbesondere für Nennbetrieb der Windenergieanlage (100),
- Bestimmen einer Höhenposition, in der eine Summe aus Nickmoment (m_{SN}) und Schubmoment (m_{S}) dem Betrage nach minimal, insbesondere null ist und
- Festlegen dieser Höhenposition als Position eines Azimutlagers (24).

## Claims

1. Method for designing a wind energy plant (100) including the steps:
- calculating an anticipated pitching moment (m_{SN}) of the wind energy plant,
- calculating an anticipated, height-dependent thrust moment of the wind energy plant (100), specifically for nominal operation of the wind energy plant (100),
- calculating a height position in which a total of the pitching moment (m_{SN}) and the thrust moment (m_{S}) has a minimum, specifically 0 value, and
- determining this height position as the position of a yaw bearing (24).

## Revendications

1. Procédé servant à concevoir une éolienne (100), comprenant les étapes suivantes :
- la détermination d'un couple de tangage (m_{SN}) attendu de l'éolienne ;
- la détermination d'un couple de poussée attendu, dépendant de la hauteur, de l'éolienne (100), en particulier pour le fonctionnement nominal de l'éolienne (100) ;
- la détermination d'une position en hauteur, dans laquelle une somme du couple de tangage (m_{SN}) et du couple de poussée (m_{S}) est minimale en termes de valeur, en particulier est nulle ; et
- la fixation de ladite position en hauteur en tant que position d'un palier azimutal (24).
